# EUROPÄISCHE PATENTSCHRIFT

(11) **EP 1 553 689 B1**
(45) Veröffentlichungstag und Bekanntmachung des Hinweises auf die Patenterteilung: **05.08.2015**
(21) Anmeldenummer: 04028782.3
(22) Anmeldetag: 04.12.2004
(51) Int. Cl.: H02M 7/19, H02M 7/217

(54) **Stromrichterschaltungsanordung für Generatoren mit dynamisch veränderlicher Leistungsabgabe**
Current rectifier circuit device for generators with dynamically variable power output
Dispositif redresseur de courant pour générateurs avec sortie de puissance variable dynamiquement

(30) Priorität: 09.01.2004 DE 102004001478
(43) Veröffentlichungstag der Anmeldung: 13.07.2005
(73) Patentinhaber: SEMIKRON Elektronik GmbH & Co. KG, 90431 Nürnberg (DE)
(72) Erfinder: Schreiber, Dejan, 90408 Nürnberg (DE)

(56) Entgegenhaltungen:
- WO-A-01/52379
- US-A- 5 499 178
- US-A- 5 638 263

## Beschreibung

Die Erfindung beschreibt eine Stromrichterschaltungsanordnung zur Umformung einer dreiphasigen Generatormittelspannung in eine Hochvoltgleichspannung für den Einsatz als Wandler zwischen einem Generator mit dynamisch variierender Ausgangsleistung und einer Hochvoltgleichspannungsverbindung zu einem Wechselrichter. Derartige dynamisch variierende Ausgangsleistungen der Generatoren treten beispielhaft bei Windenergieanlagen auf. In der Anordnung mehrerer Windenergieanlagen zu so genannten Windparks werden nach dem Stand der Technik die einzelnen Windenergieanlagen mit einem gemeinsamen Wechselrichter, der zur Stromeinspeisung in ein Stromnetz dient, mit einer Hochvoltgleichspannungsverbindung verbunden.

Nach dem Stand der Technik finden hierbei zur Stromerzeugung vorzugsweise Generatoren der Mittelspannungsklasse Verwendung. Die drei Phasen der Ausgänge dieser Generatoren sind mit einem Transformator verbunden, der die Mittelspannung in Hochspannung der Größenordnung 100000 Volt transformiert. Diese erzeugte Wechselspannung wird anschließend mittels eines Hochspannungsdiodengleichrichters gleichgerichtet und in die Hochvoltgleichspannungsverbindung eingespeist.

Eine weitere sehr moderne Ausgestaltung der Generatoren sowie eine allgemeine Beschreibung der oben genannten Anordnung von Windenergieanlagen wurde beispielhaft von F. Owman auf der Konferenz "Windpower 2001", Juni, Washington D.C. vorgestellt. Die hierin vorgestellten Generatoren erzeugen direkt eine Hochvoltwechselspannung, wodurch auf einen nachgeschalteten Transformator zur Erzeugung derselben verzichtet werden kann.

Nachteilig am geschilderten Stand der Technik ist hierbei, dass naturgemäß die Ausgangsspannungen der einzelnen Windkraftanlagen nicht identisch sind, da auch innerhalb eines Windparks zumindest geringfügig unterschiedliche Windgeschwindigkeiten an unterschiedlichen Orten vorherrschen und somit die Drehgeschwindigkeiten aller Rotoren und damit auch die Rotationsgeschwindigkeit aller Generatoren nicht identisch sind. Dies hat zur Folge, dass die erzeugten Spannungen zur Einspeisung in die Hochvoltgleichspannungsverbindung ebenfalls nicht identisch sind. Um zumindest geringfügig unterschiedliche Drehgeschwindigkeiten ausgleichen zu können werden als Generatoren vorzugsweise Synchronmaschinen eingesetzt, da diese Synchronmaschinen fremd erregt sind. Durch eine geeignete Anpassung der Erregung jedes Generators können deren Rotationsgeschwindigkeiten aneinander angepasst werden. Damit ist es möglich die Ausgangsspannungen aller Windenergieanlagen eines Windparks konstant zu halten und somit erst die Hochvoltgleichspannungsverbindung zu ermöglichen, wobei allerdings der Wirkungsgrad der Windkraftanlage reduziert wird. Ein Einsatz von permanent erregten Generatoren ist hier allerdings nicht möglich, da hier die Einflussnahme auf deren Drehgeschwindigkeit durch die Fremderregung fehlt.

Weiterhin nachteilig am beschriebenen Stand der Technik ist, dass im Gegensatz zu den in einem Windpark lokal unterschiedlichen Windgeschwindigkeiten die zeitlich unterschiedlichen Windgeschwindigkeiten naturgemäß wesentlich stärker schwanken. Ein vollständiger Ausgleich dieser Schwankungen, der zu einer zeitlich konstanten Spannung der Hochvoltgleichspannungsverbindung führt, ist nur beschränkt möglich.

Größere Schwankungen der Windgeschwindigkeit führen somit zwangsläufig zu einer mit der Zeit variierenden Spannung der Hochvoltgleichspannungsverbindung. Der aus der Hochvoltgleichspannungsverbindung gespeiste Wechselrichter ist auf eine bestimmte Spannung dieser Hochvoltgleichspannungsverbindung ausgelegt. Falls diese Sollspannung der maximalen Spannung der Hochvoltgleichspannungsverbindung entspricht, ergibt dies für genau diese Spannung eine sehr effektive Einspeisung in das Stromnetz. Allerdings wäre in diesem Fall bei deutlich geringeren Windgeschwindigkeiten und damit verbundenen deutlich geringeren Spannungswerten in der Hochvoltgleichspannungsverbindung die Netzeinspeisung nicht mehr möglich. Daher wird der Wechselrichter nach dem Stand der Technik auf eine geringere, beispielsweise auf die halbe Spannung, als die maximale Spannung der Hochvoltgleichspannungsverbindung ausgelegt. Bei dieser Auslegung soll anderseits auch bei maximaler Spannung im Hochvoltgleichspannungsverbindung die ins Netz abgegebenen Leistung den gleichen Wert erreichen, wie bei oben genannter Auslegung auf diese maximale Spannung. Somit muss der auf geringere Spannung ausgelegte Wechselrichter überdimensioniert werden im Vergleich zu einem Wechselrichters dimensioniert auf den Maximalwert. Daher ist bedingt durch die unterschiedlichen Spannungswerte in der Hochvoltgleichspannungsverbindung eine für mehrere Betriebszustände, d.h. verschiedene Windgeschwindigkeiten, optimale Dimensionierung des Wechselrichters nicht möglich.

Ebenso nachteilig am genannten Stand der Technik ist, dass bedingt durch den Hochspannungsdiodengleichrichter der Generatorstrom nicht sinusförmig ist und daher der Generator bei gegebener Drehzahl nicht seine maximale Leistung abgeben kann, was ebenfalls zu einem verminderten Wirkungsgrad der Windkraftanlage führt.

Bekannt ist anderseits nach dem Stand der Technik beispielhaft in der US 5,625,545 offen gelegt eine kaskadierte Anordnung von gleichartigen Zellen einer bestimmten Funktionalität. Diese Druckschrift beschreibt einen Zweiquadranten AC-AC Antrieb für Wechselstrommotoren. Hierbei findet ein Transformator mit einer Mehrzahl von Sekundärwicklungen Anwendung. Diese Sekundärwicklungen speisen kaskadierte Zellen mit einphasigem Wechselspannungsausgang. Diese Reihenschaltung der einzelnen Zellen dient der Spannungsvervielfachung in einem Zweig.

Die vorliegende Erfindung hat die Aufgabe eine Stromrichterschaltungsanordnung zur Umformung einer Wechselspannung in eine Hochvoltgleichspannung vorzustellen, die den Einsatz von einer Mehrzahl von Generatorausführungen erlaubt, eine von der Generatordrehzahl unabhängige konstante Hochvoltgleichspannung erzeugt und annähernd sinusförmige Generatorströme erzeugt.

Die Aufgabe wird gelöst durch eine Stromrichterschaltung mit den Merkmalen des Anspruchs 1. Bevorzugte Weiterbildungen finden sich in den Unteransprüchen.

Eine Stromrichterschaltungsanordnung zur Umformung einer mehr- vorzugsweise dreiphasigen Generatorspannung, vorzugsweise im Mittelspannungsbereich, in eine Hochvoltgleichspannung der erfinderischen Art besteht aus folgenden wesentlichen Komponenten: einem Transformator und einer Mehrzahl von Gleichrichterzellen. Der Transformator besteht aus mindestens einer primärseitigen Wicklung je Phase sowie einer Mehrzahl von sekundärseitigen Wicklungen je Phase. Jeweils drei dieser sekundärseitigen Wicklungen unterschiedlicher Phase sind mit einer Gleichrichterzelle verbunden. Die Ein- und Ausgänge dieser Gleichrichterzellen sind miteinander derart verbunden, dass jeweils der Ausgang einer Zelle mit dem Eingang der nächsten Zelle verbunden ist und sich somit eine kaskadierte Reihenschaltung ergibt. Der Transformator kann hier auch entfallen, falls an Stelle des Mittelspannungsgenerators ein Hochspannungsgenerator eingesetzt wird, der die erforderliche Spannung direkt an seinen Ausgängen zur Verfügung stellt.

Eine erfindungsgemäße Gleichrichterzelle besteht ihrerseits aus einem Eingangsgleichrichter und zwei in Reihe geschalteten Aufwärtswandlern, wobei die Mittelanzapfung der Sekundärwicklung des Transformators mit den Mittelpunkten der Reihenschaltung der Aufwärtswandler verbunden ist

Nachfolgend wird der erfinderische Gedanke anhand der Fig. 1 bis 4 beispielhaft erläutert.
- Fig. 1: zeigt eine Stromrichterschaltungsanordnung zur Erzeugung einer Netzspannung aus einer Mehrzahl von über eine Hochvoltgleichspannungsverbindung verbundenen Generatorausgängen nach dem Stand der Technik.
- Fig. 2: zeigt eine Ausgestaltung einer Gleichrichterzelle einer erfindungsgemäßen Stromrichterschaltungsanordnung.
- Fig. 3: zeigt eine Ausgestaltung einer erfindungsgemäßen Stromrichterschaltungsanordnung.
- Fig. 4: zeigt in einer Simulation die durch eine erfindungsgemäße Stromrichterschaltungsanordnung erzeugte Generatorspannung einer und drei Phasen.

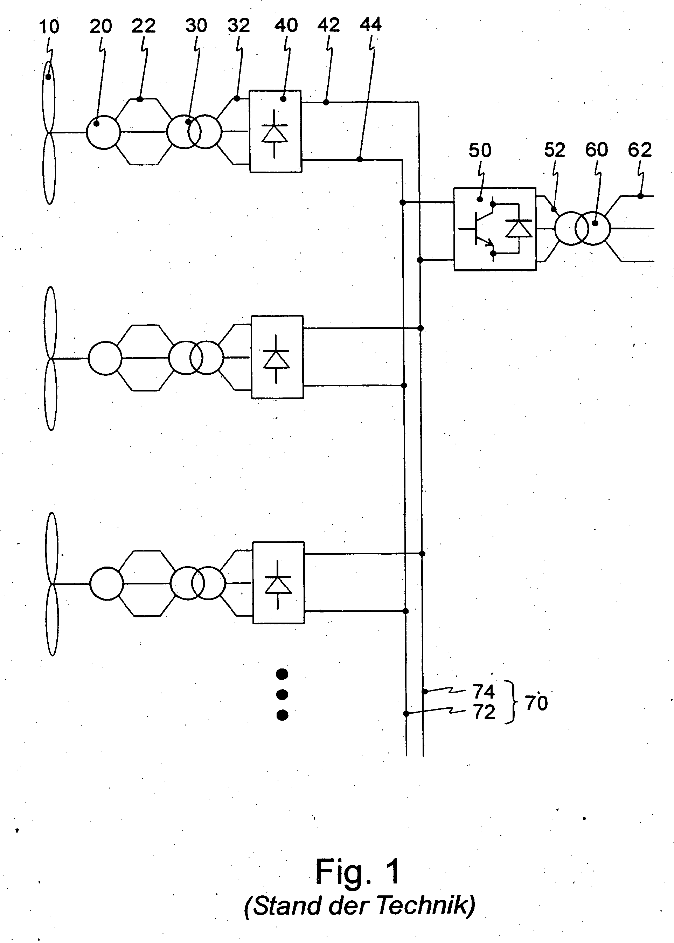

Fig. 1 zeigt eine Schaltungsanordnung zur Einspeisung der in einem Windpark erzeugten Energie in ein Stromnetz (62) bestehend aus einer Mehrzahl von über eine Hochvoltgleichspannungsverbindung (70) verbundenen Generatorausgängen (22) einzelner Windkraftanlagen nach dem Stand der Technik. Die jeweilige Windkraftanlage weist einen mittels eines Getriebes oder direkt mit dem Rotor (10) verbundenen Generator (20) auf. Nach dem Stand der Technik ist dies vorzugsweise ein fremd erregter Mittelspannungs-Synchrongenerator beispielhaft der Spannungsklasse 3 x 4,18 kV. Die Ausgänge (22) des Generators (20) sind mit einem Transformator (30) verbunden und dessen Ausgänge (32) sind wiederum mit einem Hochspannungsdiodengleichrichter (40) verbunden. Diese Kombination aus Transformator (30) und Hochspannungsdiodengleichrichter (40) erzeugt in den beiden Leitungen (72, 74) der Hochspannungsgleichstromverbindung (70) eine Gleichspannung von 2 x 140 kV, wobei deren Nullpunkt geerdet ist.

Die Ausgänge (42, 44) der Hochspannungsdiodengleichrichter (40) sind zueinander parallel geschaltet und bilden die Quelle der Hochvoltgleichspannungsverbindung (70). Mittels dieser Hochvoltgleichspannungsverbindung (70) wird die Energie der Windkraftanlagen über eine Strecke von mehreren Kilometern, beispielsweise im off shore Bereich, zu einem für alle Windkraftanlagen gemeinsamen Wechselrichter (50) übertragen. Dieser Wechselrichter (50) ist mittels eines weiteren Transformators (60) mit dem zu speisenden Stromnetz (62) verbunden.

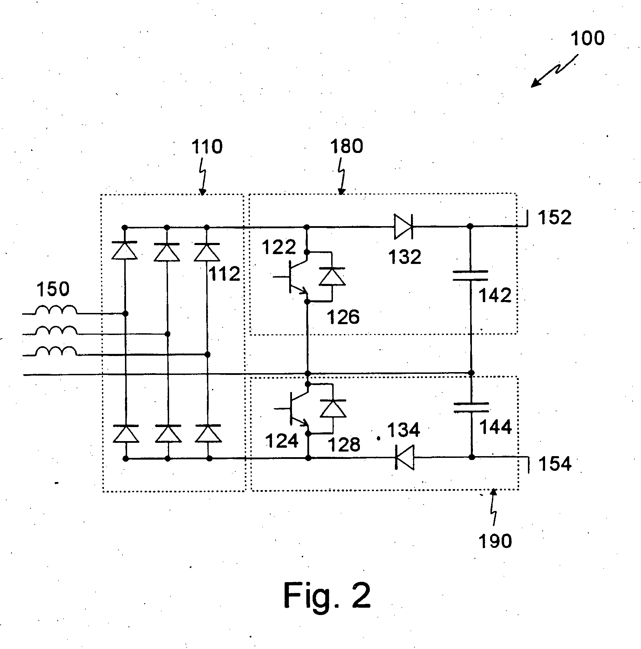

Fig. 2 zeigt eine Ausgestaltung einer Gleichrichterzelle (100) einer erfindungsgemäßen Stromrichterschaltungsanordnung, wie sie im Grunde beispielhaft aus der US 5,499,178 bekannt ist. Diese besteht aus drei Eingangsphasen, in denen jeweils eine Spule (150) angeordnet ist. Diese drei Eingangsphasen der Eingangswechselspannung werden in einem nachgeordneten Dreiphasen- Brückengleichrichters (110) in eine Gleichspannung gewandelt. Zwischen die beiden Ausgängen des Brückengleichrichter ist eine Reihenschaltung zweier Leistungshalbleiterschalter (122, 124), hier zweier IGBT (insulated gate bipolar transistor) mit jeweils einer antiparallel geschalteten Diode (126, 128), geschaltet. Der positive Ausgang des Brückengleichrichters ist weiterhin mit der Anode einer Diode (132), der Ausgangsdiode, verbunden, deren Kathode den Ausgang (152) der Gleichrichterzelle (100) bildet.

Der negative Ausgang des Brückengleichrichters ist mit der Kathode einer weiteren Diode (134), der Eingangsdiode, verbunden, deren Anode den Eingang (154) der Gleichrichterzelle (100) bildet. Weiterhin ist zwischen den Eingang (154) und den Ausgang (152) der Gleichrichterzelle (100) eine serielle Anordnung zweier Kondensatoren (142, 144) geschaltet.

Die Mittelanzapfung der drei Eingangsphasen ist mit dem Mittelpunkt der beiden in Reihe geschalteten Leistungshalbleiterschalter (122, 124) und mit dem Mittelpunkt der beiden in Reihe geschalteten Kondensatoren (142, 144) verbunden.

Diese Anordnung der Leistungshalbleiterschalter (122, 124), der hierzu parallel geschalteten Dioden (126, 128), der Ein- (154) und Ausgangsdiode (152), der Kondensatoren (142, 144) und der Spulen (150) bildet zwei in Reihe geschaltete Aufwärtswandler. Die Spulen (150) können hierbei, wie dargestellt, in den Wechselspannungseingängen des Diodengleichrichters angeordnet sein. Alternativ kann eine erste Spule des ersten Aufwärtswandlers (180) zwischen dem positiven Ausgang des Eingangsgleichrichters (110) und dem Kollektor des ersten Leistungshalbleiterschalters (122) angeordnet sein, sowie die zweite Spule des zweiten Aufwärtswandlers (190) zwischen dem negativen Ausgang des Eingangsgleichrichters (110) und dem Emitter des zweiten Leistungshalbleiterschalters (124).

Als Leistungshalbleiterschalter (122, 124) können hier beispielhaft IGCT (insulated gate commutated thyristors) oder vorzugsweise IGBTs (insulated gate bipolar transistors) nach dem Stand der Technik angeordnet sein. Eine Verwendung von IGBTs mit einer Nennspannung von 1700V würde auf Grund ihrer Reihenschaltung (122, 124) und bekannter Dimensionierungsregeln eine Gleichspannung zwischen dem Ein- (154) und dem Ausgang (152) der Gleichrichterzelle (100) von mehr als 2400V erlauben.

Die entscheidende Funktionalität der erfindungsgemäßen Gleichrichterzelle (100) liegt in der Wirkung der Aufwärtswandler (180, 190). Durch die vorgeschlagene Anordnung dieser Aufwärtswandler kann bei variierender Eingangsspannung und damit variierender Gleichgangsspannung am Ausgang des Gleichrichters (110) eine konstant hohe Gleichspannung zwischen dem Eingang (154) und dem Ausgang (152) der Gleichrichterzelle (100) erzeugt werden.

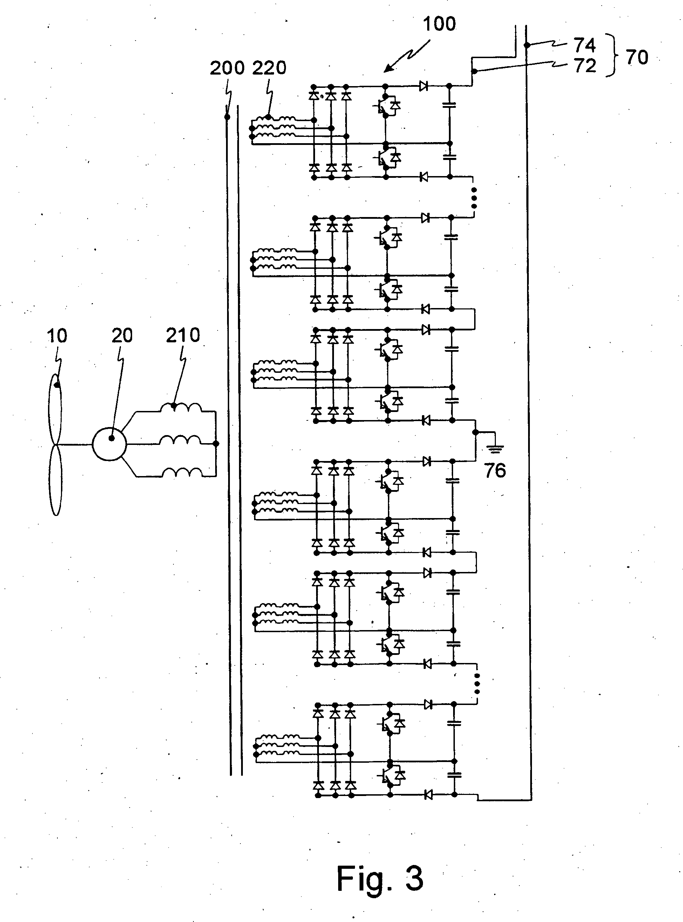

Fig. 3 zeigt eine Ausgestaltung einer erfindungsgemäßen Stromrichterschaltungsanordnung. Dargestellt ist eine Windenergieanlage mit einem Rotor (10), der einen Generator (20), hier beispielhaft einen Permanentmagnetsynchrongenerator der Spannungsklasse 3 x 6.3kV, antreibt. Als Generatoren (20) können ebenso verschiedene weitere Typen von Drehstrommaschinen eingesetzt werden, beispielhaft fremd erregte Synchronmaschinen.

Der Generator (20) erzeugt dreiphasigen Wechselstrom, der in seinem zeitlichen Verlauf sowohl in der Spannung als auch in der Stromstärke als auch in der Frequenz variiert. Die erzeugte Spannung in den drei Phasen wird jeweils an die primärseitige Wicklung (210) eines Transformators (200) angelegt. Sekundärseitig weist dieser Transformator (200) je Phase eine Mehrzahl von sekundärseitigen Wicklungen (220) auf. Jeweils drei sekundärseitige Wicklungen (220) unterschiedlicher Phase bilden die Eingangswechselspannung der Gleichrichterzellen (100).

Diese Gleichrichterzellen (100) sind derart in Reihe geschaltet, dass jeweils der Eingang (154) einer Gleichrichterzelle (100) mit dem Ausgang (152) der nächsten Gleichrichterzelle (100) verbunden ist. Der Mittelpunkt dieser Reihenschaltung liegt hierbei auf Erdpotential (74) um eine Ausgangsspannung von 2 x 140kV zu erzeugen. Abhängig von den Spannungsklassen der Kondensatoren (140) und der Leistungshalbleiterbauelemente, also den Leistungshalbleiterschaltern (122, 124) und den Dioden (112, 126, 132, 134), ist hierzu eine Mehrzahl von Gleichrichterzellen (100) in Reihe angeordnet.

Mittels dieser erfindungsgemäßen Stromrichterschaltungsanordnung kann die Spannung der Hochvoltgleichspannungsverbindung (70) über einen Bereich von einem Zehntel bis zur vollen Ausgangsspannung der Generatoren (20) immer konstant gehalten werden. Somit kann die erzeugte Energie aus den wesentlichen Anteilen der auftretenden Windgeschwindigkeiten an den einzelnen Windenergieanlagen in einem Windpark mittels eines der Hochvoltgleichspannungsverbindung (70) nachgeordneten Wechselrichters in ein Stromnetz eingespeist werden.

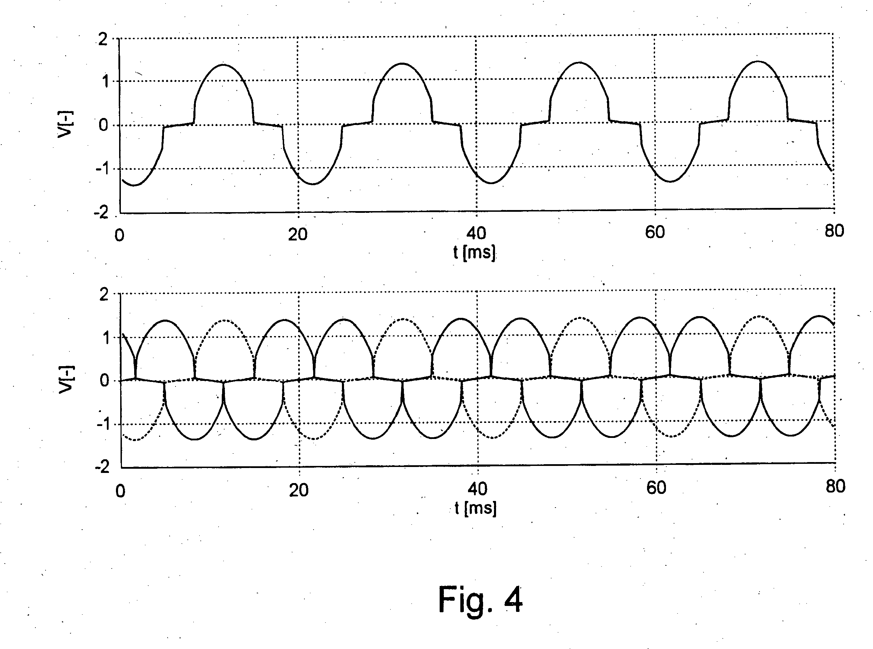

Fig. 4 zeigt in einer Simulation die durch eine erfindungsgemäße Stromrichterschaltung erzeugte Generatorspannung in beliebigen Einheiten von einer bzw. drei Phasen. Dargestellt ist im oberen Teil der Fig. 4 der zeitliche Spannungsverlauf in einer Phase des Generators, im unteren Teil der Spannungsverlauf aller drei Phasen des Generators. Mit Ausnahme der Nulldurchgänge wird dieser zeitliche Verlauf durch die erfindungsgemäße Stromrichterschaltungsanordnung einem wünschenswerten sinusförmigen Verlauf angeglichen. Nur bei annähernd sinusförmigem Generatorspannungsverlauf kann der Generator seine maximale Leistung abgeben. Somit kann durch die vorgestellte Stromrichterschaltungsanordnung die Effizienz der Windkraftanlagen erhöht werden.

Durch die erfindungsgemäße Stromrichterschaltungsanordnung kann das Drehmoment des Generators geregelt und angepasst werden, so dass in einem weiten Bereich verschiedener Windgeschwindigkeiten immer die maximale Leistung des Generators zur Verfügung steht. Dies erhöht im Vergleich zum Stand der Technik den Wirkungsgrad einer Windkraftanlage um mindestens 10%.

## Patentansprüche

1. Sfromrichterschaltungsanordnung zur Umformung einer mehrphasigen Generatorspannung in eine Hochvoltgleichspannung bestehend aus einem Transformator (200) mit mindestens einer primärseitigen Wicklung (210) je Phase sowie einer Mehrzahl von sekundärseitigen Wicklungen (220) je Phase, wobei jeweils eine der sekundärseitigen Wicklungen (220) unterschiedlicher Phase eine Mittelanzapfung aufweist und mit einer Gleichrichterzelle (100) verbunden ist und diese Gleichrichterzellen mit ihren Gleichspannungsein- (154) und Gleichspannungsausgängen (152) miteinander Verbunden sind, wobei die Gleichrichterzellen (100) jeweils aus einem mit den Sekundärwicklungen (220) des Transformators (200) verbundenen Eingangsgleichrichter (110) und zwei in Reihe geschalteten Aufwärtswandlern (180, 190) bestehen und die Mittelanzapfungen der Sekundärwicklungen (220) des Transformators (200) jeweils mit dem Mittelpunkt der Reihenschaltung der Aufwärtswandler der mit der Sekundärwicklung verbundenen Gleichrichterzelle verbunden sind und wobei der Mittelpunkt der Reihenschaltung der Gleichrichterzellen (100) auf Erdpotential (74) liegt.

2. Stromrichterschaltungsanordnung nach Anspruch 1, wobei der Eingangsgleichrichter (110) ein dreiphasiger Diodengleichrichter ist.

3. Stromrichterschaltungsanordnung nach Anspruch 1, wobei jeder Aufwärtswandler aus einem Leistungshalbleiterschalter (122, 124) mit antiparallel dazu geschalteter Diode (126, 128) mindestens einer Spule (150), einer Diode (132, 134) und einem Kondensator (142, 144) besteht.

4. Stromrichterschaltungsanordnung nach Anspruch 1, wobei
die Reihenschaltung der Aufwärtswandler ausgestaltet ist als eine Reihenschaltung zweier Leistungshalbleiterschalter (122, 124) mit jeweils antiparallel dazu geschalteter Diode (126, 128) mindestens zwei Spulen (150), einer Reihenschaltung von Kondensatoren (142, 144) sowie jeweils einer Diode (154) am Eingang und einer Diode (152) am Ausgang der Gleichrichterzelle (100),
wobei der Kollektor des ersten Leistungshalbleiterschalters (122) mit dem positiven Ausgang des Eingangsgleichrichters (110) und der Emitter des zweiten Leistungshalbleiterschalters (124) mit dem negativen Ausgang des Eingangsgleichrichters (110) verbunden ist,
die Anode der Ausgangsdiode (132) mit dem Kollektor des ersten Leistungshalbleiterschalters (122) und dem positiven Ausgang des Eingangsgleichrichters (110), die Kathode mit dem ersten Kondensator (142) und dem Ausgang (152) der Gleichrichterzelle (100) verbunden ist die Kathode der Eingangsdiode (134) mit dem Emitter des zweiten Leistungshalbleiterschalters (124) und dem negativen Ausgang des Eingangsgleichrichters (110), die Anode mit dem zweiten Kondensator (144) und dem Eingang der Gleichrichterzelle, (110) verbunden ist
und die Mittelanzapfung der Sekundärwicklung (220) des Transformators (200) mit dem Mittelpunkt der Reihenschaltung der Leistungshalbleiterschalter (122, 124) und dem Mittelpunkt der Reihenschaltung der Kondensatoren (142, 144) verbunden ist.

5. Stromrichterschaltungsanordnung nach Anspruch 1, wobei die Spule des ersten Aufwärtswandlers (180) zwischen dem positiven Ausgang des Eingangsgleichrichters (110) und dem Kollektor des ersten Leistungshalbleiterschalters (122) angeordnet ist und die Spule des zweiten Aufwärtswandlers (190) zwischen dem negativen Ausgang des Eingangsgleichrichters (110) und dem Emitter des zweiten Leistungshalbleiterschalters (124) angeordnet ist.

6. Stromrichterschaltungsanordnung nach Anspruch 1, wobei die Spulen (150) der Aufwärtswandler (180, 190) in den Wechselspannungseingängen des Gleichrichters (110) angeordnet sind.

7. Stromrichterschaltungsanordnung nach Anspruch 1, wobei die Leistungshalbleiterschalter (122, 124) IGBTs (insulated gate bipolar transistors), oder IGCT (insulated gate commutated thyristors) sind.

## Claims

1. Power converter circuit arrangement for converting a polyphase generator voltage into a high-voltage DC voltage, said power converter circuit arrangement consisting of a transformer (200) having at least one primary-side winding (210) per phase and a plurality of secondary-side windings (220) per phase, wherein in each case one of the secondary-side windings (220) of a different phase has a centre tap and is connected to a rectifier cell (100), and these rectifier cells are connected to one another at their DC voltage inputs (154) and DC voltage outputs (152), wherein the rectifier cells (100) each consist of an input rectifier (110), which is connected to the secondary windings (220) of the transformer (200), and two series-connected boost converters (180, 190), and the centre taps of the secondary windings (220) of the transformer (200) are each connected to the centre point of the series circuit of boost converters of the rectifier cell connected to the secondary winding, and wherein the centre point of the series circuit of the rectifier cells (100) is at earth potential (74).

2. Power converter circuit arrangement according to Claim 1, wherein the input rectifier (110) is a three-phase diode rectifier.

3. Power converter circuit arrangement according to Claim 1, wherein each boost converter consists of a power semiconductor switch (122, 124) with a diode (126, 128) connected back-to-back in parallel therewith, at least one coil (150), a diode (132, 134) and a capacitor (142, 144).

4. Power converter circuit arrangement according to Claim 1, wherein the series circuit of boost converters is configured as a series circuit of two power semiconductor switches (122, 124) each having a diode (126, 128) connected back-to-back in parallel therewith, at least two coils (150), a series circuit of capacitors (142, 144) and in each case one diode (154) at the input and one diode (152) at the output of the rectifier cell (100), wherein the collector of the first power semiconductor switch (122) is connected to the positive output of the input rectifier (110), and the emitter of the second power semiconductor switch (124) is connected to the negative output of the input rectifier (110), the anode of the output diode (132) is connected to the collector of the first power semiconductor switch (122) and to the positive output of the input rectifier (110), the cathode is connected to the first capacitor (142) and the output (152) of the rectifier cell (100), the cathode of the input diode (134) is connected to the emitter of the second power semiconductor switch (124) and the negative output of the input rectifier (110), the anode is connected to the second capacitor (144) and the input of the rectifier cell (110), and the centre tap of the secondary winding (220) of the transformer (200) is connected to the centre point of the series circuit of the power semiconductor switches (122, 124) and the centre point of the series circuit of capacitors (142, 144).

5. Power converter circuit arrangement according to Claim 1, wherein the coil of the first boost converter (180) is arranged between the positive output of the input rectifier (110) and the collector of the first power semiconductor switch (122), and the coil of the second boost converter (190) is arranged between the negative output of the input rectifier (110) and the emitter of the second power semiconductor switch (124).

6. Power converter circuit arrangement according to Claim 1, wherein the coils (150) of the boost converters (180, 190) are arranged in the AC voltage inputs of the rectifier (110).

7. Power converter circuit arrangement according to Claim 1, wherein the power semiconductor switches (122, 124) are IGBTs (insulated-gate bipolar transistors) or IGCTs (insulated-gate commutated thyristors).

## Revendications

1. Circuit redresseur de courant servant à convertir une tension de générateur polyphasée en une haute tension continue,
constitué d'un transformateur (200) doté d'au moins un enroulement primaire (210) par phase ainsi que de plusieurs enroulements secondaires (220) par phase,
un des enroulements secondaires (220) des différentes phases présentant un prélèvement central et étant raccordé à une cellule de redressement (100),
ces cellules de redressement étant raccordées l'une à l'autre par leurs entrées (154) à courant continu et leurs sorties (152) à courant continu,
les cellules de redressement (100) étant chacune constituée d'un redresseur d'entrée (110) raccordé aux enroulements secondaires (220) du transformateur (200) et de deux convertisseurs avant (180, 190) raccordés en série,
les prélèvements centraux des enroulements secondaires (220) du transformateur (200) étant chacun raccordé au point central du circuit série constitué des convertisseurs avant de la cellule de redressement raccordée à l'enroulement secondaire,
le point central du circuit série des cellules de redressement (100) étant placé au potentiel de terre (74).

2. Circuit redresseur de courant selon la revendication 1, dans lequel le redresseur d'entrée (110) est un redresseur triphasé à diodes.

3. Circuit redresseur de courant selon la revendication 1, dans lequel chaque convertisseur avant est constitué d'un commutateur de puissance à semi-conducteur (122, 124) auquel des diodes (126, 128) sont raccordées de manière antiparallèle, d'au moins une bobine (150), d'une diode (132, 134) et d'un condensateur (142, 144).

4. Circuit redresseur de courant selon la revendication 1, dans lequel le circuit série des convertisseurs avant est configuré comme circuit série de deux commutateurs de puissance (122, 124) à semi-conducteur auxquels des diodes (126, 128) sont raccordées de manière antiparallèle, d'au moins deux bobines (150), d'un circuit série de condensateurs (142, 144) ainsi que d'une diode (154) à l'entrée de la cellule de redressement (100) et d'une diode (152) à sa sortie,
le collecteur du premier commutateur de puissance (122) à semi-conducteur étant raccordé à la sortie positive du redresseur d'entrée (110) et l'émetteur du deuxième commutateur de puissance (124) à semi-conducteur étant raccordé à la sortie négative du redresseur d'entrée (110),
l'anode de la diode de sortie (132) étant raccordée au collecteur du premier commutateur de puissance (122) à semi-conducteur et à la sortie positive du redresseur d'entrée (110), la cathode étant raccordée au premier condensateur (142) et à la sortie (152) de la cellule de redressement (100),
la cathode de la diode d'entrée (134) étant raccordée à l'émetteur du deuxième commutateur de puissance (124) à semi-conducteur et à la sortie négative du redresseur d'entrée (110),
l'anode étant raccordée au deuxième condensateur (144) et à l'entrée de la cellule de redressement (110) et le prélèvement central de l'enroulement secondaire (220) du transformateur (200) étant raccordé au point central du circuit série constitué des commutateurs de puissance (122, 124) à semi-conducteur et au point central du circuit série constitué des condensateurs (142, 144).

5. Circuit redresseur de courant selon la revendication 1, dans lequel la bobine du premier convertisseur avant (180) est disposée entre la sortie positive du redresseur d'entrée (110) et le collecteur du premier commutateur de puissance (122) à semi-conducteur et la bobine du deuxième convertisseur avant (190) est disposée entre la sortie négative du redresseur d'entrée (110) et l'émetteur du deuxième commutateur de puissance (124) à semi-conducteur.

6. Circuit redresseur de courant selon la revendication 1, dans lequel les bobines (150) des convertisseurs avant (180, 190) sont disposées dans les entrées à tension alternative du redresseur (110).

7. Circuit redresseur de courant selon la revendication 1, dans lequel les commutateurs de puissance (122, 124) à semi-conducteur sont des IGBT ("insulated gate bipolar transistors" - transistors bipolaires à grille isolée) ou des IGCT ("insulated gate commutated thyristors" - thyristors commutés à grille isolée).
